(19) Europäisches Patentamt

European Patent Office

Office européen des brevets

(11) Publication number: **0 203 074 B1**

# EUROPEAN PATENT SPECIFICATION
## published in accordance with Art. 158(3) EPC

(45) Date of publication of patent specification: **15.05.91**   (51) Int. Cl.⁵: **F16L 25/00**

(21) Application number: **85901240.3**

(22) Date of filing: **19.02.85**

(86) International application number:
**PCT/US85/00260**

(87) International publication number:
**WO 86/03275 (05.06.86 86/12)**

(54) **OILWELL TUBING CONNECTION.**

(30) Priority: **23.11.84 PCT/US84/01936**

(43) Date of publication of application:
**03.12.86 Bulletin 86/49**

(45) Publication of the grant of the patent:
**15.05.91 Bulletin 91/20**

(84) Designated Contracting States:
**DE FR GB**

(56) References cited:
| | |
|---|---|
| **US-A- 1 562 373** | **US-A- 1 703 232** |
| **US-A- 1 932 427** | **US-A- 2 094 491** |
| **US-A- 3 346 278** | **US-A- 3 361 448** |
| **US-A- 3 572 771** | **US-A- 3 586 353** |

(73) Proprietor: **WATTS, John, Dawson**
**Suite 105, 10700 N.W. Freeway**
**Houston, TX 77092(US)**

(72) Inventor: **WATTS, John, Dawson**
**Suite 105, 10700 N.W. Freeway**
**Houston, TX 77092(US)**

(74) Representative: **Lainé, Simon James et al**
**Wynne-Jones, Lainé & James 22, Rodney**
**Road**
**Cheltenham Gloucestershire. GL50 1JJ(GB)**

## Description

This invention relates to pipe joints, and is primarily concerned with connecting oilwell tubing.

Technical Field

The outer diameters of conventional threaded pipe couplings are substantially greater than the outer diameters of the pipes that they connect. The same is true for most strings of casing and tubing installed within oilwells. However, several constraints are presented by oilwells that are not normally present in surface piping systems. Each consecutive string, including couplings, must pass within a bore diameter established by a drill or by a previously set string of pipes. Additionally, there must be sufficient clearance between that bore and the maximum diameter of the string being run to allow free lowering without sticking and to give a sufficient flow area through the annulus so formed for fluids, without creating an unacceptable pressure drop due to friction of the flowing fluid. Thirdly, oilwell strings must withstand axial tension and compression loads caused by the weight of kilometres of pipe that may be hanging within the well. Further, oilwell strings may be subject to external fluid pressures greater than internal pressures and so have a tendency to collapse. For these and other reasons, joints with upset ends and high cost "premium connections" have been introduced. However, such solutions still generally result in the outer diameter of the connections being greater than the outer diameter of the pipes that they connect.

There do exist connections for pipes not having upset ends wherein one end of a pipe is threaded externally and the other end is correspondingly threaded internally. Such pipes can be screwed together to result in a connection with an outer diameter no larger than the pipe mid-section. However, such joints, for example Hydril FJ Premium tubing connections, enjoy only 42% axial tension strength as compared to the unthreaded pipe wall. This is about the same as non-upset API tubing connections. Presently, due to coupling constraints, a typical set of co-axial oilwell pipes has outer diameters 13.97 cm, 7.30 cm and 4.06 cm. The present invention should enable these figures to be reduced to 7.30 cm, 4.06 cm and 2.67 cm respectively, resulting in a less expensive and a more efficient installation and saving many tons of steel per oilwell.

When a pipe having no reduced wall thickness contains fluid pressure, the axial stress within that wall caused by fluid pressure is approximately one-half of the circumferential stress within that wall caused by the same pressure. Therefore a like amount of mechanical axial stress may be applied by pipe weight or the like, without the axial stress exceeding the circumferential stress. Reduction of the pipe wall thickness, as by a thread formed on a joint of non-upset pipe, will therefore reduce still further the magnitude of axial stress that may be dedicated to support pipe weight.

There is therefore a substantial need for a flush joint tubular connection having a higher efficiency with no loss of the connection's ability to seal against fluid pressure.

Background Art

A flush joint tubular connection has inner and outer diameters substantially the same as the tubing to be connected. One such connection, made by the Hydril Co. and covered by numerous patents, comprises a first straight thread, a second straight thread of sufficient diameter to pass within the bore of the first thread and a tapered mating seal between the two threads. This is a premium joint of high cost and, according to published data, has an axial strength only 42% of that of the pipe wall.

Standard A.P.I. non-upset tubing connections comprise couplings having outer diameters considerably larger than the pipe outer diameter, but they still only enjoy approximately 42% efficiency as above. A.P.I. does list a "turned down" collar outer diameter to increase clearance betweeen strings. However, the "turned down" diameter still substantially exceeds the pipe outer diameter.

No prior art discloses a flush joint tubular connection having tapered threads which, when properly assembled, generates optimum stresses within the small end of the external thread and within the large end of the internal thread thereby providing a connection of maximum efficiency. Conventional pipe connections have threads with like tapers and result in a constant diametrical interference along the taper between the external and internal threads, thereby causing excessive stresses or requiring increased wall thickness at the end of the pipe. Excessive stresses reduce the joint strength and an increased wall thickness rules out a flush joint connection. It is therefore clear that a flush joint connection having a high efficiency is needed for use within oilwells and other pipe assemblies where radial clearance is limited.

US Patent 3,005,414 requires a tubing string to convey fluid power to a downhole pump, a string to convey exhausted power fluid from the downhole pump to the surface, and a third string to convey well fluid from the pump to the wellhead. He depicts three parallel strings set within a large casing and makes no mention of the use of flush pipe joints.

According to the present invention there is provided a pipe joint comprising two aligned tubular members having no increase in wall thickness near their adjacent ends, one said end of one tubular member having a tapered internal thread and the other said end of the other tubular member having a tapered external thread for screw connection of the tubular members, characterised in that the length and taper of the threads are such that the wall strength of said one tubular member in the area of the smallest diameter of thread engagement is at least 75% of the nominal wall strength of that tubular member.

The internal bore of said other tubular member may be equal to or less than that of said one tubular member.

The external thread is preferably formed on a taper of smaller included angle than that of the internal thread. However, at full make up of the connection the external thread should fully engage the internal thread.

The threads are best formed with load flanks and stab flanks, the load flanks being formed at an angle of 75° or more with respect to the common axis of the tubular members, and the stab flanks being formed at an angle of lesser degree with respect to said axis. The load flanks and stab flanks will generally be connected at the roots and crests by correspondingly radiused portions.

The internal thread will preferably extend substantially to the bore of said one tubular member, while said other tubular member may have a shoulder adjacent the larger diameter end of the tapered external thread against which the end of said one tubular member abuts at full make up of the connection.

Said other tubular member may be of stronger material than said one tubular member and have a neck at the larger diameter end of the tapered external thread. This neck will then have a cross-sectional wall area less than the nominal cross-sectional wall area of said one tubular member.

Said other tubular member may be of similar form at both ends, to provide a connector to join said one tubular member to a matching tubular member. The combined wall strength through the connection should then provide a greater collapse resistance than does either said one tubular member. Also, the relative collapse resistances should be such that neckdown and failure of the unthreaded portions of said one tubular member will occur before failure of the connection upon the application of increasing tension loads.

Brief Description of the Drawing

Figure 1 is a vertical section of a connection between two pipes, as an example of the present invention,
Figure 2 illustrates a thread form as used in such a connection, and
Figure 3 illustrates a thread form as used in conventional pipe joints.

Detailed Description of the Invention

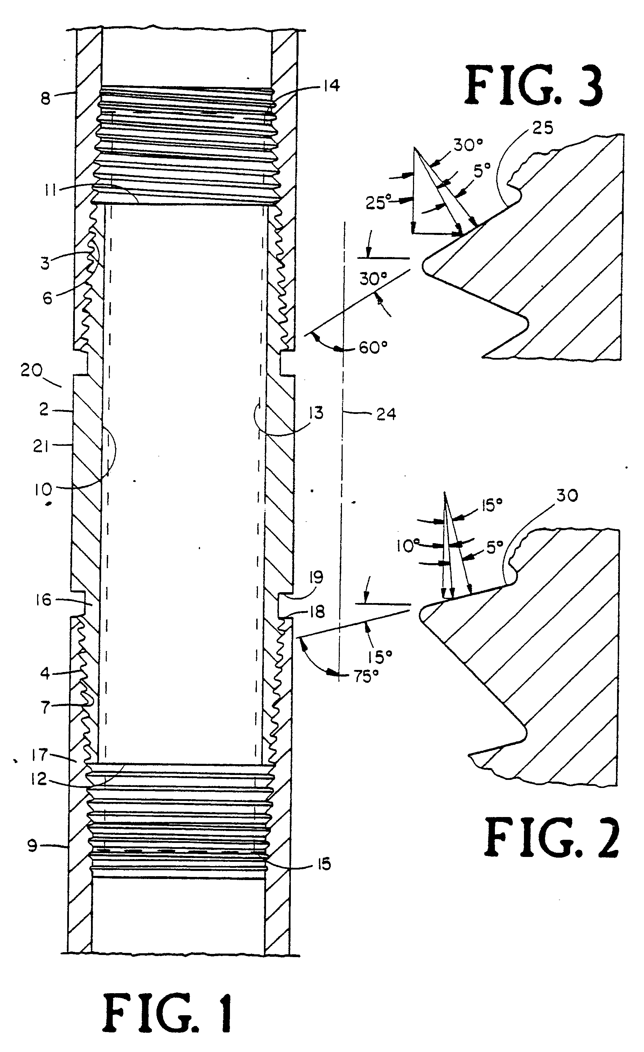

Figure 1 shows a connection 20 comprising a tubular coupling 2 with tapered external screw threads 3 formed on an upper portion and having like screw threads 4 formed on a lower portion. These mate in sealing engagement with tapered internal screw threads 6 and 7 formed within the adjaacent ends of non-upset pipes 8 and 9, respectively.

The coupling 2 has an inner cylindrical surface 10, an upper end Face 11 and a lower end face 12. These end faces do not reach to the inner ends of the internal threads 6 and 7 when it is desired to have a connection with an inner diameter that will pass the industry standard "drift bar" for that size tubing.

In such a connection, the axial tension strength is determined by the cross-sectional area of the pipe at the transition between the engaged and disengaged portions of its internal thread 6 or 7, that is the cross-sectional area of the pipe 9, for example, at 17 opposite the end face 12. That area is taken from the root of the threading to the outer diameter of the pipe. This can provide an axial tension strength in excess of three fourths of the pipe wall strength, giving an efficiency greater than 75%.

Should a connection having a still higher axial strength be required, the coupling 2 may be formed with an inner cylindrical surface 13, of lesser diameter than that of the bore of the pipes 8 and 9, an upper end face 14 and a lower end face 15, as shown in outline. The coupling then extends for substantially the full effective length of the internal threads 6 and 7 and provides a connection having an axial strength substantially equal to the pipe wall strength, thereby approaching 100% efficiency.

Between the larger diameter ends of the screw threads 3 and 4 and the central portion 21 of the coupling 2 the external diameter is reduced to form necks 16, each with a shoulder 19 providing the transition to the central portion 21 and facing the adjacent end face 18 of the pipe 8 or 9.

Since typical pipes come in lengths sixty times or more the length of couplings that connect them, the couplings may be formed of material much stronger than the pipe material without causing significant increase of cost for the entire string. The use of higher strength material for the coupling 2 gives higher axial strength for the connection 20 as a whole. This is because the strength of the coupling at the necks 16 is increased and because collapse resistance of the coupling end at face 11 or 12 is increased, thereby also increasing the pullout strength.

Further to increase the pullout strength of the connection 20, a screw thread having a load-bearing flank formed at 75° with respect to the tubing axis may be used, as depicted in Figure 2. The angle of the stab flank is substantially less and at the roots and crests there are corresponding radii. This shape of thread nay be contrasted with a common thread used on oilwell tubing depicted in Figure 3. The thread of Figure 3 has a loadbearing flank 25 at an angle of 60° to the tubing axis 24. Assuming an angle of friction of 5°, elementary vector analysis will show that the thread depicted in Figure 2 results in a pullout strength $2\frac{1}{2}$ times that of Figure 3. Reduction of the flank angle still further can virtually eliminate any tendency to pullout.

In order to ensure a good seal for the connection at the least diameter and therefore the least axial fluid load, the taper of the external thread may be made slightly less than the taper of the internal thread. This gives maximum radial compression of the coupling 2 at its ends. Also, as shown in Figure 1 at 17 opposite the lower end face 12, the wall of the pipe 9 is thicker than that of the coupling 2 at that region. Thus, upon makeup, the end face 12 will compress more than the wall portion 17 expands due to the difference in thicknesses, the moduli of elasticity being assumed to be substantially the same. Since the coupling 2 may be made of higher strength material than the pipes 8 or 9, the thicknesses may be proportioned such that the stresses in the walls at 12 and 17 are substantially at the same percentage of yield strength of the materials of which the members are formed.

When the taper of the external thread is made less than the taper of the internal thread, initial contact between the two occurs only adjacent the end face 11 or 12. Upon continued makeup, thread contact progresses towards the larger end of the tapers eventually to cause full engagement of the threads. A slight amount of further makeup will generate circumferential stress within the end of the pipe 8 or 9, adjacent end face 18, establishing a position of full make up. This further increases the compressive circumferential stresses within the tapered ends of the coupling 2 to a first predetermined value, and simultaneously increases the tensile circumferential stresses within the pipes 8 and 9 between the zone 17 and the end face 18 to a second predetermined value, less in magnitude than said first value. These values may be set at the same percentage of the unit yield strengths of the respective materials, thereby to provide maximum strength for the connection.

In order to ascertain the desired stress values, I have developed the following formulae for a given set of conditions, as an an example:

FT = Hand-Tight Torque = $36.83 \, (W \, D)^{\frac{1}{2}}$
Additional Power-tight Turns = 12 PDY
Initial taper of External Thread =

$$T - \frac{150DY}{EL}$$

= centimetres/metres on dia.
where:
W = pipe wall thickness, centimetres
D = pipe outside diameter, centimetres
Y = pipe unit yield strength, pascals Coupling Unit Yield Strength = 1.45 Pipe Unit Yield Strength
T = Initial internal thread taper centimetres/metres on dia.
L = length of thread engagement, centimetres
P = thread lead, centimetres
E = modulus of elasticity

The mating threads may be dimensioned so as to make up as shown in Figure 1. Should greater bending strength or greater torsional strength be desired, the mating threads may be dimensioned and given closer tolerances so as to allow the end faces 18 and shoulders 19 to abut upon make up.

## Claims

1. A pipe joint comprising two aligned tubular members (2,9) having no increase in wall thickness near their adjacent ends, one said end of one tubular member (9) having a tapered internal thread (7) and the other said end of the other tubular member (2) having a tapered external thread (4) for screw connection of the tubular members, characterised in that the length and taper of the threads (4,7) are such that the wall strength of said one tubular member (9) in the area of the smallest diameter of thread engagement is at least 75% of the nominal wall strength of that tubular member.

2. A pipe joint according to Claim 1, characterised in that the internal bore (13) of said other tubular member is not greater than that of said one tubular member (9).

3. A pipe joint according to Claim 1 or 2, characterised in that the external thread (4) is formed on a taper of smaller included angle than that of the internal thread (7).

4. A pipe joint according to Claim 3, characterised in that at full make up of the connection the external thread (4) fully engages the internal thread (7).

5. A pipe joint according to any preceding claim, characterised in that the threads (4,7) are formed with load flanks (30) and stab flanks, the load flanks being formed at an angle of 75° or more with respect to the common axis of the tubular members, and the stab flanks being formed at an angle of lesser degree with respect to said axis.

6. A pipe joint according to Claim 5, characterised in that the load flanks (30) and stab flanks are connected at the roots and crests by correspondingly radiused portions.

7. A pipe joint according to any preceding claim, characterised in that the internal thread (7) extends substantially to the bore of said one tubular member (9).

8. A pipe joint according to any preceding claim, characterised in that said other tubular member (2) has a shoulder (19) adjacent the larger diameter end of the tapered external thread (4) against which the end (18) of said one tubular member (9) abuts at full make up of the connection.

9. A pipe joint according to any preceding claim, characterised in that said other tubular member (2) is of stronger material than said one tubular member (9).

10. A pipe joint according to any preceding claim, characterised in that said other tubular member (2) has a neck (16) at the larger diameter end of the tapered external thread (4), the neck having a cross-sectional wall area less than the nominal cross-sectional wall area of said one tubular member (9).

11. A pipe joint according to any preceding claim, characterised in that said other tubular member (2) is of similar form at both ends, to provide a connector to join said one tubular member (9) to a matching tubular member (8).

12. A pipe joint according to Claim 11 as appendant to Claim 9, characterised in that the combined wall strength through the connection provides a greater collapse resistance than does either said one tubular member (8, 9).

13. A pipe joint according to Claim 12 as appendant to Claim 10, characterised in that the relative collapse resistances are such that neckdown and failure of the unthreaded portions of said one tubular members (8, 9) will occur before failure of the connection upon the application of increasing tension loads.

**Revendications**

1. Raccord de tuyauterie comprenant deux éléments tubulaires alignés (2, 9) ne présentant pas d'augmentation de l'épaisseur de paroi à proximité de leurs extrémités adjacentes, l'une desdites extrémités d'un élément tubulaire (9) comportant un filet interne conique (7) et l'autre desdites extrémités de l'autre élément tubulaire (2) comportant un filet externe conique (4) en vue d'une liaison par vissage des éléments tubulaires, caractérisé en ce que la longueur et la conicité des filets (4, 7) sont telles que la résistance de paroi dudit élément tubulaire (9) dans le domaine du plus petit diamètre du contact des filets est au moins égale à 75 % de la résistance de paroi nominale de cet élément tubulaire.

2. Raccord de tuyauterie selon la revendication 1, caractérisé en ce que l'alésage interne (13) dudit autre élément tubulaire n'est pas plus grand que celui dudit premier élément tubulaire (9).

3. Raccord de tuyauterie selon la revendication 1 ou 2, caractérisé en ce que le filet externe (4) est formé sur un cône de plus petit angle inclus que celui du filet interne (7).

4. Raccord de tuyauterie selon la revendication 3, caractérisé en ce que, lorsque la liaison est totale, le filet externe (4) entre entièrement en contact avec le filet interne (7).

5. Raccord de tuyauterie selon l'une quelconque des revendications précédentes, caractérisé en ce que les filets (4, 7) sont munis de flancs de charge (30) et de flancs de guidage, les flancs de charge étant formés sous un angle de 75° ou supérieur par rapport à l'axe commun des éléments tubulaires, et les flancs de guidage étant formés sous un angle inférieur par rapport audit axe.

6. Raccord de tuyauterie selon la revendication 5, caractérisé en ce que les flancs de charge (30) et les flancs de guidage sont reliés au niveau des bases et des sommets par des parties arrondies de façon correspondante.

7. Raccord de tuyauterie selon l'une quelconque des revendications précédentes, caractérisé en ce que le filet interne (7) s'étend sensiblement jusqu'à l'alésage dudit élément tubulaire (9).

8. Raccord de tuyauterie selon l'une quelconque des revendications précédentes, caractérisé en ce que ledit autre élément tubulaire (2) comporte un épaulement (19), adjacent à l'extrémité de plus grand diamètre du filet externe conique (4), contre lequel l'extrémité (18) dudit élément tubulaire (9) vient buter lorsque la liaison est complète.

9. Raccord de tuyauterie selon l'une quelconque des revendications précédentes, caractérisé en ce que ledit autre élément tubulaire (2) est constitué par un matériau plus résistant que ledit premier élément tubulaire (9).

10. Raccord de tuyauterie selon l'une quelconque des revendications précédentes, caractérisé en ce que ledit autre élément tubulaire (2) présente un col (16) au niveau de l'extrémité de plus grand diamètre du filet externe conique (4), le col ayant une surface de paroi en section transversale inférieure à la surface de paroi en section transversale nominale dudit premier élément tubulaire (9).

11. Raccord de tuyauterie selon l'une quelconque des revendications précédentes, caractérisé en ce que ledit autre élément tubulaire (2) est de forme similaire aux deux extrémités pour former un connecteur destiné à relier ledit premier élément tubulaire (9) à un élément tubulaire (8) apparié.

12. Raccord de tuyauterie selon la revendication 11 en combinaison avec la revendication 9, caractérisé en ce que la résistance de paroi combinée au niveau de la liaison procure une plus grande résistance à l'affaissement que ne le fait l'un quelconque desdits éléments tubulaires (8, 9).

13. Raccord de tuyauterie selon la revendication 12 en combinaison avec la revendication 10, caractérisé en ce que les résistances à l'affaissement relatives sont telles que, lors de l'application de contraintes de traction croissantes, il apparaît un étranglement et une défaillance des parties non filetées desdits éléments tubulaires (8, 9) avant l'apparition d'une défaillance de la liaison.

**Ansprüche**

1. Rohrverbindung mit zwei fluchtenden rohrförmigen Gliedern (2, 9), deren Wandstärke nahe ihrer benachbarten Enden nicht zunimmt, wobei das eine Ende des einen rohrförmigen Glieds (9) ein kegeliges Innengewinde (7) und das andere Ende des anderen rohrförmigen Glieds (2) ein kegeliges Außengewinde (4) zur Schraubverbindung der rohrförmigen Glieder aufweist,
**dadurch gekennzeichnet,**
daß die Länge und Konizität der Gewinde (4, 7) derart ist, daß die Wandstärke des einen rohrförmigen Glieds (9) im Bereich des kleinsten Durchmessers des Schraubeingriffs wenigstens 75 % der Nominalwandstärke dieses rohrförmigen Glieds beträgt.

2. Rohrverbindung nach Anspruch 1, dadurch gekennzeichnet, daß die Innenbohrung (13) des anderen rohrförmigen Glieds nicht größer als die des einen rohrförmigen Glieds (9) ist.

3. Rohrverbindung nach Anspruch 1 oder 2, dadurch gekennzeichnet, daß das Außengewinde (4) auf einem Kegel kleineren Öffnungswinkels als der des Innengewindes (7) ausgebildet ist.

4. Rohrverbindung nach Anspruch 3, dadurch gekennzeichnet, daß das Außengewinde (4) bei vollständig hergestellter Verbindung gänzlich mit dem Innengewinde (7) in Eingriff steht.

5. Rohrverbindung nach einem der Ansprüche 1 - 4, dadurch gekennzeichnet, daß die Gewinde (4, 7) mit Lastflanken (30) und Stichflanken ausgebildet sind, wobei die Lastflanken in einem Winkel von 75° oder mehr bezogen auf die gemeinsame Achse der rohrförmigen Glieder und die Stichflanken in einem Winkel geringeren Grads bezogen auf die Achse ausgebildet sind.

6. Rohrverbindung nach Anspruch 5, dadurch gekennzeichnet, daß die Lastflanken (30) und Stichflanken am Fuß und Kopf durch entsprechend gerundete Abschnitte verbunden sind.

7. Rohrverbindung nach einem der Ansprüche 1 - 6, dadurch gekennzeichnet, daß sich das Innengewinde (7) im wesentlichen zur Bohrung des einen rohrförmigen Glieds (9) erstreckt.

8. Rohrverbindung nach einem der Ansprüche 1 - 7, dadurch gekennzeichnet, daß das andere rohrförmige Glied (2) nahe dem den größeren Durchmesser aufweisenden Ende des kegeligen Außengewindes (4) eine Schulter (19) aufweist, gegen die das Ende (18) des einen rohrförmigen Glieds (9) bei vollständig hergestellter Verbindung stößt.

9. Rohrverbindung nach einem der Ansprüche 1 - 8, dadurch gekennzeichnet, daß das andere rohrförmige Glied (2) aus stärkerem Material als das eine rohrförmige Glied (9) ist.

10. Rohrverbindung nach einem der Ansprüche 1 - 9, dadurch gekennzeichnet, daß das andere rohrförmige Glied (2) an dem den größeren Durchmesser aufweisenden Ende des kegeligen Außengewindes (4) einen Ansatz (16) aufweist, der eine geringere Querschnittswandfläche als die Nominalquerschnittswandfläche des einen rohrförmigen Glieds (9) aufweist.

11. Rohrverbindung nach einem der Ansprüche 1 - 10, dadurch gekennzeichnet, daß das andere rohrförmige Glied (2) an beiden Enden eine ähnliche Form zur Bildung eines Anschlußstücks aufweist, um das eine rohrförmige Glied (9) mit einem passenden rohrförmigen Glied (8) zu verbinden.

12. Rohrverbindung nach Anspruch 9 und 11, dadurch gekennzeichnet, daß die kombinierte Wandstärke der Verbindung einen größeren Knickwiderstand als eines der rohrförmigen Glieder (8, 9) aufweist.

13. Rohrverbindung nach Anspruch 10 und 12, dadurch gekennzeichnet, daß die relativen Knickwiderstände derart sind, daß Einschnüren und Ausfallen der gewindelosen Abschnitte der einen rohrförmigen Glieder (8, 9) auftritt, bevor die Verbindung bei Beaufschlagung mit zunehmenden Spannungsbelastungen ausfällt.

EP 0 203 074 B1

FIG. 3

FIG. 2

FIG. 1